Europäisches Patentamt

European Patent Office

Office européen des brevets

(19)

(11) Numéro de publication: **0 059 147**
**B1**

(12) **FASCICULE DE BREVET EUROPEEN**

(45) Date de publication du fascicule du brevet:
22.05.85

(21) Numéro de dépôt: **82400296.8**

(22) Date de dépôt: **19.02.82**

(51) Int. Cl.⁴: **B 62 D 25/20,** B 60 R 21/02,
B 60 N 1/00

(54) **Carrosserie ou caisse de sécurité pour véhicule automobile.**

(30) Priorité: **20.02.81 FR 8103691**

(43) Date de publication de la demande:
**01.09.82 Bulletin 82/35**

(45) Mention de la délivrance du brevet:
**22.05.85 Bulletin 85/21**

(84) Etats contractants désignés:
**DE GB IT**

(56) Documents cités:
**FR - A - 1 137 219**
**FR - A - 1 546 685**
**FR - A - 2 120 277**
**FR - A - 2 310 242**
**FR - A - 2 387 143**
**FR - A - 2 424 146**

(73) Titulaire: **AUTOMOBILES CITROEN, 62 Boulevard
Victor-Hugo, F-92200 Neuilly-sur-Seine (FR)**
Titulaire: **AUTOMOBILES PEUGEOT, 75, avenue de la
Grande Armée, F-75116 Paris (FR)**

(72) Inventeur: **Fabre, Eric, 20, rue d'Epinay, F-91700 Sainte
Geneviève des Bois (FR)**

(74) Mandataire: **Boivin, Claude, 9, rue Edouard-Charton,
F-73000 Versailles (FR)**

## Description

La présente invention concerne une carrosserie ou caisse de sécurité pour véhicule automobile, qui comprend un élément de renforcement disposé transversalement, incorporé à un siège de véhicule et propre à résister aux efforts de déformation se développant en cas de collision latérale.

Les solutions prévues pour protéger les occupants d'un véhicule automobile des conséquences d'impacts frontaux résolvent mal les problèmes posés par les collisions latérales dont la fréquence et la gravité sont au moins aussi importantes que celles des impacts frontaux. En effet, dans le cas d'une telle collision, les corps sont orientés de manière défavorable et se trouvent dans une position déséquilibrée par rapport à la direction des forces développées lors de la collision.

Le brevet français 2 387 143 décrit une carrosserie ou caisse de véhicule automobile comportant deux éléments transversaux de renforcement qui sont incorporés aux sièges du véhicule et traversent l'assise de ces sièges. Ces éléments se trouvent sensiblement en regard des portes et ces dernières sont formées de deux panneaux ent e lesquels un élément plastiquement déformable absorbeur d'énergie, par exemple en polyuréthane expansé, est interposé au niveau des éléments de renforcement transversaux. Cette caisse ou carrosserie est relativement efficace. Mais l'expérience montre que les éléments de renforcement ne sont pas suffisamment hauts pour assurer une protection excellente; de plus, cette solution est coûteuse.

La présente invention a pour objet une carrosserie ou caisse du type indiqué précédemment et dont la résistance lors d'une collision latérale est excellente.

La carrosserie ou caisse selon l'invention est caractérisée en ce que l'élément transversal de renforcement a chacune de ses extrémités ancrée à une portion rigide de la carrosserie et constitue le pivot du dossier d'un siège ou d'une ligne de dossiers de sièges, et en ce que le plancher du véhicule comporte, au droit de la zone d'assise du ou des sièges, un bossage utilisé pour la fixation de cette assise.

L'utilisation de l'élément transversal de renforcement comme pivot du dossier d'un siège empêche que ce siège soit réglable longitudinalement. Mais cette absence de réglage longitudinal est souvent sans inconvénient, tout au moins pour le siège du passager, en particulier dans le cas de véhicules utilitaires ou de faible gabarit.

L'élément transversal et le bossage peuvent n'être prévus qu'au droit du siège du passager. Dans ce cas, l'élément de renforcement peut être fixé à l'une de ses extrémités, sur le montant latéral adjacent de la carrosserie, et à son autre extrémité sur un caisson longitudinal médian.

Dans un autre mode de réalisation, l'élément transversal de renforcement et le bossage s'étendent sur toute la largeur du véhicule. Dans ce cas, l'élément transversal peut être fixé à ses deux extrémités aux montants latéraux de la carrosserie et maintenu dans sa zone centrale par un caisson longitudinal médian.

Dans les deux modes de réalisation, le caisson longitudinal médian prolonge avantageusement la console centrale du poste de conduite.

On a décrit ci-après, à titre d'exemple non limitatif, un mode de réalisation de la carrosserie selon l'invention avec référence au dessin annexé dans lequel:

La figure 1 est une vue en coupe longitudinale d'une partie de cette carrosserie au droit d'un siège;

La figure 2 en est une coupe transversale;

La figure 3 en est une vue en perspective;

La figure 4 montre un mode de fixation de l'élément tubulaire transversal sur le renfort de pied milieu;

La figure 5 montre un autre mode de fixation de l'élément tubulaire transversal.

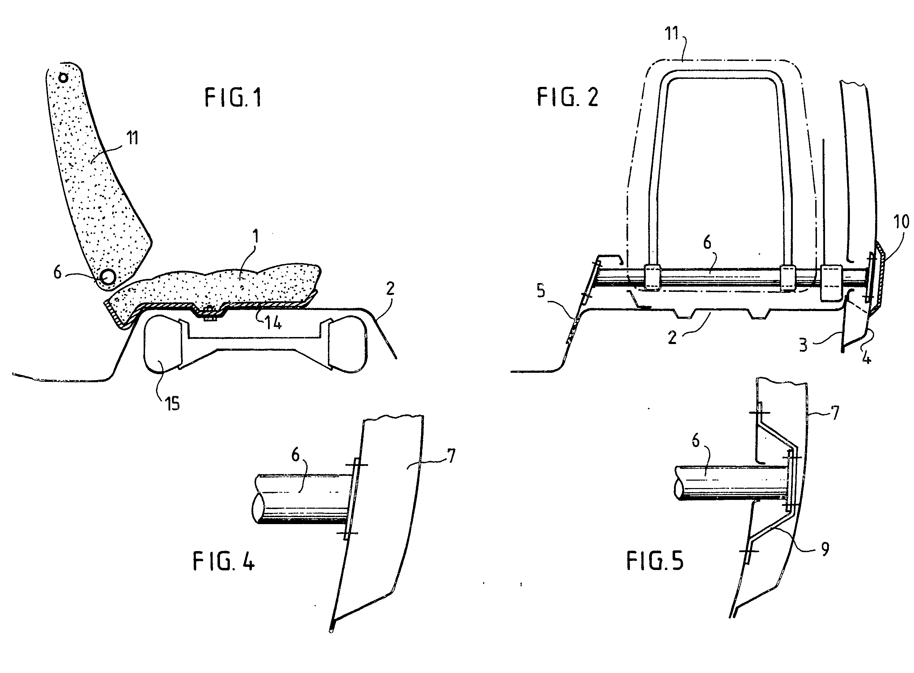

Aux figures 1 à 3, on voit une caisse ou carrosserie d'un véhicule automobile dont le plancher comporte, au droit de la zone d'assise 1 du passager un profond bossage embouti 2 dont l'une des extrémités est fixée latéralement à l'âme 3 du longeron adjacent 4 de la carrosserie.

Dans l'axe longitudinal médian du véhicule est prévu un caisson tubulaire longitudinal 5 disposé entre le siège du passager et celui du conducteur et, de préférence, constitué par un prolongement de la console centrale de la caisse. L'autre extrémité du bossage est fixée à cette console.

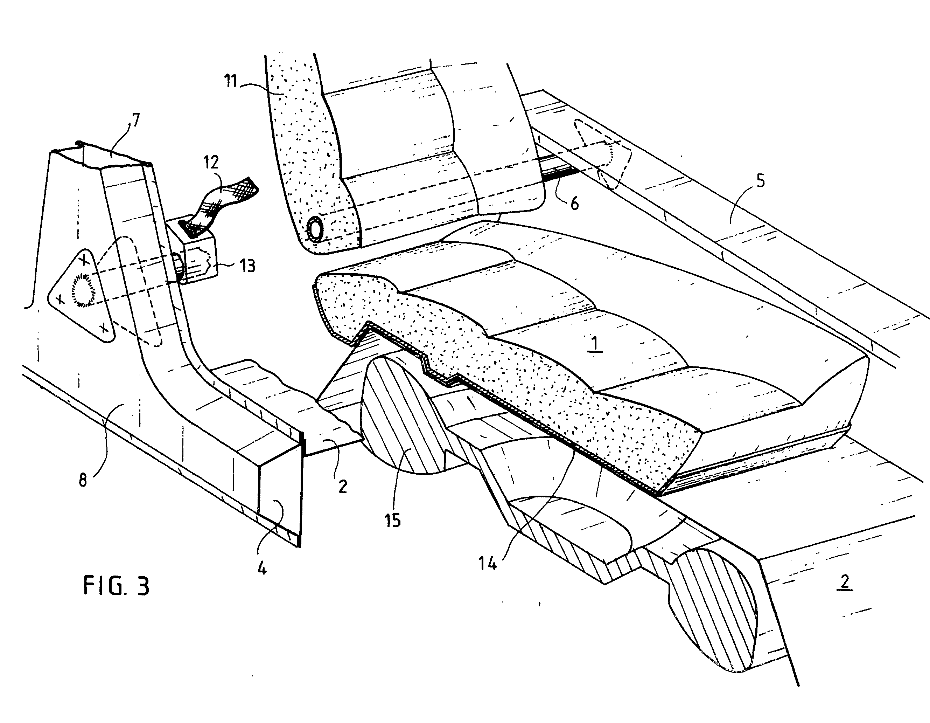

Un élément tubulaire transversal 6 est ancré d'une part sur le caisson 5 et d'autre part sur la paroi latérale adjacente de la carrosserie, au niveau du pied milieu 7 de celle-ci. Ce dernier ancrage peut être effectué soit contre la paroi externe 8 de cette carrosserie, comme représenté à la figure 3, soit sur le renfort du pied milieu 7, directement (figure 4) ou par l'intermédiaire d'un pontet 9 (figure 5).

A la figure 2, la fixation de la traverse est masquée par un profilé latéral protecteur 10.

L'élément tubulaire 6 sert d'articulation au dossier 11 du siège du passager et d'ancrage pour la fixation d'une ceinture de sécurité 12, par exemple par l'intermédiaire l'un boîtier d'enrouleur 13.

L'assise 1 est logée à l'intérieur d'une coque réceptacle 14 fixée sur le bossage 2.

Le bossage 2 et la traverse 6 donnent à la carrosserie une grande rigidité transversale et une forte résistance à l'écrasement en cas de choc latéral. Le bossage 2 peut contenir des équipements auxiliaires, par exemple une roue de secours 15, un réservoir d'essence ou un groupe additionnel de chauffage.

Il va de soi que la présente invention ne doit pas être considérée comme limitée au mode de réalisation décrit et représenté. C'est ainsi, par exemple, que le bossage 2 et l'élément tubulaire 6 peuvent s'étendre sur toute la largeur de la carrosserie, l'élément tubulaire 6 traversant le caisson 5 et étant maintenu par ce dernier. Dans ce cas, l'assise du siège du conducteur ne pouvant être réglable longitudinalement, on peut équiper le poste de conduite d'un pédalier et d'un volant réglables.

**Revendications**

1. Carrosserie de sécurité pour véhicule automobile qui comprend un élément disposé transversalement (6) incorporé à un siège de véhicule et propre à résister aux efforts de déformation se développant en cas de collision caractérisée en ce que cet élément transversal de renforcement (6) a chacune de ses extrémités ancrée à une portion rigide de la carrosserie et constitue le pivot du dossier (11) d'un siège ou d'une ligne de dossiers de sièges, et en ce que le plancher du véhicule comporte, au droit de la zone d'assise (1) du ou des sièges, un bossage transversal (2) utilisé pour la fixation de cette assise.

2. Carrosserie selon la revendication 1, caractérisée en ce que l'élément transversal de renforcement (6) et le bossage (2) ne sont prévus qu'au droit du siège du passager.

3. Carrosserie selon la revendication 2, caractérisée en ce que l'élément transversal (6) est fixé, à l'une de ses extrémités, sur le montant latéral adjacent de la carrosserie et à son autre extrémité sur un caisson longitudinal médian (5).

4. Carrosserie selon la revendication 1, caractérisée en ce que l'élément transversal de renforcement (6) et le bossage (2) s'étendent sur toute la largeur du véhicule.

5. Carrosserie selon la revendication 4, caractérisée en ce que l'élément transversal (6) est fixé à ses deux extrémités aux montant latéraux de la carrosserie et maintenu dans sa zone centrale par un caisson longitudinal médian (5).

6. Carrosserie selon la revendication 3 ou 5, caractérisée en ce que le caisson longitudinal médian (5) prolonge la console centrale du poste de conduite.

**Patentansprüche**

1. Sicherheitskarrosserie für Automobile mit einem in Querrichtung angeordneten Bauteil (6), das in einem Fahrzeugsitz aufgenommen und imstande ist, den Verformungskräften Widerstand zu leisten, die im Falle einer Kollision auftreten, dadurch gekennzeichnet, dass dieses querangeordnete Verstärkungsbauteil (6) an jedem seiner Enden an einem starren Teil der Karosserie verankert ist und die Drehachse für die Rücklehne (11) eines Sitzes oder einer Reihe von Rücklehnen bildet, und dass der Boden des Fahrzeuges im rechten Winkel zur Auflage (1) des Sitzes oder der Sitze ein querverlaufendes Verstärkungsblech (2) mit Einsenkungen aufweist, das zur Befestigung dieser Auflage dient.

2. Sicherheitskarosserie nach Anspruch 1, dadurch gekennzeichnet, dass das querverlaufende Verstärkungsbauteil (6) und das Verstärkungsblech (2) nur zum Sitz des Passagiers im rechten Winkel angeordnet sind.

3. Sicherheitskarosserie nach Anspruch 2, dadurch gekennzeichnet, dass das querverlaufende Verstärkungsbauteil (6) mit einem Ende am angrenzenden seitlichen Pfosten der Karosserie und mit seinem anderen Ende an einem in der Mitte und in Längsrichtung angeordneten Kasten (5) befestigt ist.

4. Sicherheitskarosserie nach Anspruch 1, dadurch gekennzeichnet, dass sich das querverlaufende Verstärkungsbauteil (6) und das Verstärkungsblech (2) über die ganze Breite des Fahrzeugs erstrecken.

5. Sicherheitskarosserie nach Anspruch 4, dadurch gekennzeichnet, dass das querverlaufende Bauteil (6) mit seinen beiden Enden an den seitlichen Pfosten der Karosserie befestigt ist und an seinem Mittelteil durch einen in der Mitte und in Längsrichtung verlaufenden Kasten (5) festgehalten ist.

6. Sicherheitskarosserie nach Anspruch 3 oder 5, dadurch gekennzeichnet, dass der in der Mitte und in Längsrichtung verlaufende Kasten (5) den zentralen Träger des Fahrerraumes verlängert.

**Claims**

1. Safety bodywork for a motor vehicle which comprises a transversally disposed element (6) incorporated in a vehicle seat and adapted to withstand deformation forces developing in the case of a collision, characterized in that this transverse reinforcement element (6) has each of its ends anchored to a rigid portion of the bodywork and forms the pivot of the back (11) of a seat or a line of seat backs and in that the floor of the vehicle comprises, at right angles to the sitting zone (1) of the seat or seats, a transverse boss (2) used for fixing this sitting portion.

2. Bodywork according to claim 1, characterized in that the transverse reinforcement element (6) and the boss (2) are only provided at right angles to the passenger seat.

3. Body work according to claim 2, characterized in that the trasverse element (6) is fixed, at one of its ends, to the adjacent alteral upright of the bodywork and at its other end to a longitudinal median boxlike structure (5).

4. Bodywork according to claim 1, characterized in that the transverse reinforcement element (6) and the boss (2) extend over the whole width of the vehicle.

5. Bodywork according to claim 4, characterized in that the transverse element (6) is fixed at both ends to the side uprights of the bodywork and is held in its central zone by a longitudinal median boxlike structure (5).

6. Bodywork according to claim 3 or 5, characterized in that the median longitudinal boxlike structure (5) extends the central bracket of the steering post.

FIG. 1

FIG. 2

FIG. 4

FIG. 5

FIG. 3